# EUROPEAN PATENT APPLICATION

(11) **EP 4 783 027 A1**
(43) Date of publication of application: **29.07.2026**
(21) Application number: 26153591.8
(22) Date of filing: 22.01.2026
(51) Int. Cl.: G06F 16/31

(54) **SYSTEM AND METHOD FOR LOG INDEXING IN COMPUTING ENVIRONMENT**

(30) Priority: 23.01.2025 US 202519034877
(71) Applicant: LogChat Limited t/a Bronto, Dublin 2 Dublin (IE)
(72) Inventor: Aquilanti, Marco, Dublin (IE); Tracey, David, Dublin (IE); Casanova, Miguel Angel, Dublin (IE)
(74) Representative: Tomkins & Co

(57) **Abstract**

A system and method for indexing data in an event logging system comprise providing a data file for storing a set of log data; generating a summary index associated with the data file; arranging the set of log data as a plurality of key-value pairs in the summary index; analyzing each key of the key-value pairs to determine at least one of a plurality of indexes in the summary index for adding each value of the key-value pairs; and determining whether to access the data file in response to a search of the summary index.

## Description

### FIELD

Embodiments of the present invention relate generally to computer data storage environments, and more particularly to a summary and partition index for log management.

### BACKGROUND

Log files, also referred to generally as record files or logs, are used in modem computing environments to summarize activity of the computers in the environment, and more specifically, to collect statistical data and/or for backup and recovery operations, for example, to provide an audit trail for troubleshooting issues or trend analysis. A log file is typically arranged as a timestamped sequence of events about usage patterns and operations within a computer. However, log file content searches can consume substantial computational resources.

Log indexing is a well-known technique for sorting log file contents for user access. Typically, the logs are organized into keys based on attributes, such as chronological order, username, etc. to make the logs faster and easier to access. However, log indexing tools have large storage requirements.

It is desirable for an indexing system of a general-purpose logging platform to provide for an efficient and expeditious retrieval of data in response to a search request.

### SUMMARY

Embodiments of the present invention provide a method, a computer program product, and a computer system, for indexing data in an event logging system comprises providing a data file for storing a set of log data; generating a summary index associated with the data file; arranging the set of log data as a plurality of key-value pairs in the summary index; analyzing each key of the key-value pairs to determine at least one of a plurality of indexes in the summary index for adding each value of the key-value pairs; and determining whether to access the data file in response to a search of the summary index.

### BRIEF DESCRIPTION OF THE DRAWINGS

FIG. 1 is a block diagram of a computing environment that may employ aspects of the present inventive concept.
FIG. 2 is a block diagram of a logging platform that may employ aspects of the present inventive concept.
FIG. 3 is a block diagram of an indexing system for an event logging platform, in accordance with some embodiments of the present inventive concept.
FIG. 4 is a flow diagram of a method for indexing data, in accordance with some embodiments of the present inventive concept.
FIG. 5 is a flow diagram of a method for executing a search algorithm, in accordance with some embodiments of the present inventive concept.
FIG. 6 is a table of log data processed, in accordance with embodiments of the present inventive concept.
FIG. 7 is a block diagram of a summary index file that represents the data in FIG. 6.
FIG. 8 is a bar graph illustrating comparative results of a conventional log file content search and a search performed according to embodiments of the present inventive concept.
FIG. 9 is a line graph illustrating comparative results of a conventional log file content search and a search performed according to embodiments of the present inventive concept.

### DETAILED DESCRIPTION

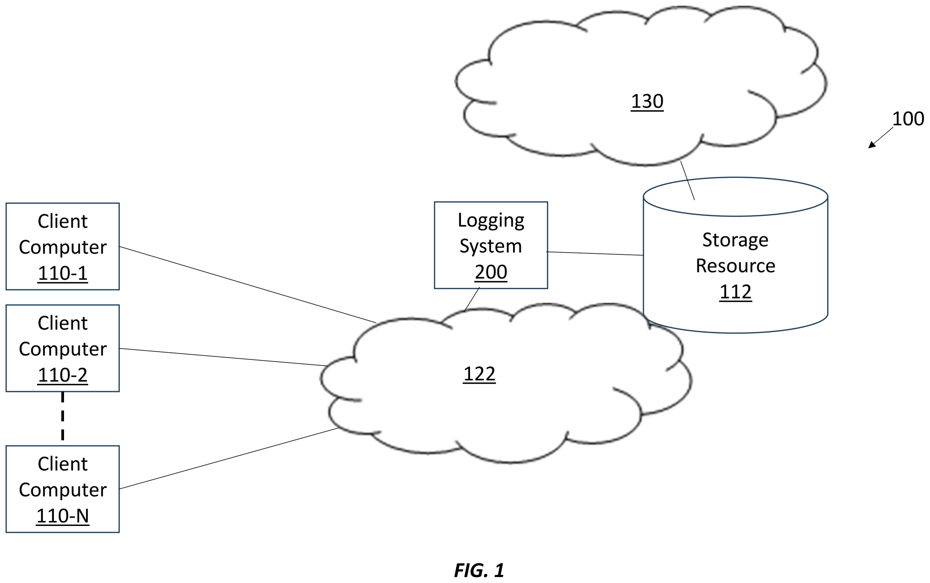

FIG. 1 is a block diagram of a computing environment 100 that may employ aspects of the invention. In particular, the computing environment 100 contains an example of an environment for the execution of at least some of the computer code involved in performing the inventive methods.

In addition to computer code, the computing environment 100 includes, for example, a plurality of client computers 110-1 to N (wherein N is an integer) (generally, 110), a data communication network 122 such as a local area network (LAN), storage area network (SAN) wide area network (WAN) and the like, which may include a public and/or private cloud, a logging platform 200, and at least one storage resource 112.

Each computer 110 can have (not shown) at least one processor, a communication fabric such as busses, I/O ports, etc., a volatile memory, a persistent storage (including an operating system and various software applications), a peripheral device set (including a user interface (UI)), and network module. A computer 110 may be embodiments, for example, as a desktop computer, laptop computer, tablet computer, a server in a data center, mainframe computer, quantum computer or any other form of computer or mobile device now known or to be developed in the future that is capable of querying a database or other storage system via the network 122, for example, a storage resource 112, an artificial intelligence, e.g., deep neural network, environment, and/or other cloud storage in communication with the logging platform 200, which provides content indexing operations (described herein). In some embodiments, the computers 110 may be coupled for data communications to one or more storage arrays of the storage resource 112 through the network 122, e.g., a storage area network (SAN) or a local area network (LAN). The network 122 may include private and/or public clouds that deliver cloud computing services. In some embodiments, cloud services may be configured and orchestrated according to a Software as a Service (SaaS) environment 130 where software is centrally hosted and allocated on a subscription basis. A SaaS environment 130 is also known for providing on-demand software, web-based software, or web-hosted software, where data can be moved for storage.

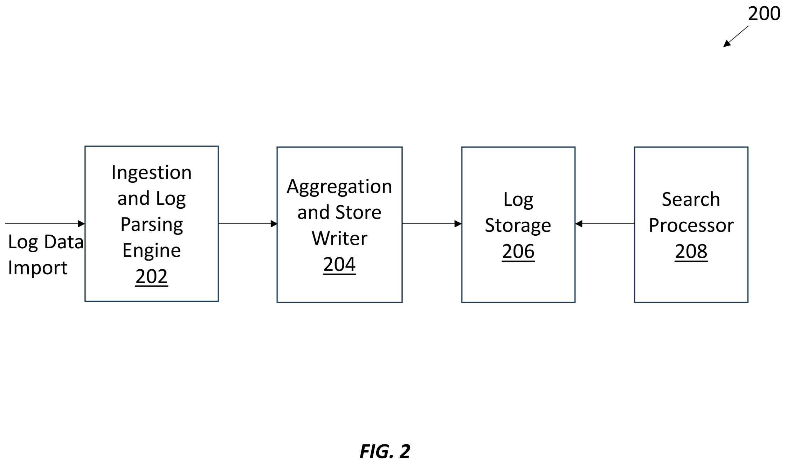

Although the logging platform 200 is shown in FIG. 1 as being a separate component of the computing environment 100, some or all elements of the logging platform 200 (shown in FIG. 2) may coexist with the database or storage device, which is constructed to store metadata or the like, e.g., indexes, logs, etc. managed by the logging platform 200. Other components of the logging platform such as a search processor 208 may be on a separate platform such as a client computer 110.

FIG. 2 is a block diagram of the logging platform 200 of FIG. 1. In addition to indexing operations mentioned above, the logging platform 200 can communicate with other components of the computing environment 100 of FIG. 1 to perform or contribute to data classification, data mining or searching, and the like. As shown, the logging platform 200 can include an ingestion and log parsing engine 202, an aggregation and store writer module 204, a log storage device 206, and a search processor 208.

As input data moves through the pipeline of the logging platform 200, the processors of these components transform the data into searchable events. At the start of the pipeline, the ingestion and log parsing engine 202 has an input for collecting log data from one or more sources and parsing the log data, e.g., to try to determine the keys and values, or key-value pairs, in the data. The input data can be structured, unstructured or semi-structured. In some embodiments, the ingestion and log parsing engine 202 can perform cloud data ingestion operations.

The aggregation and store writer module 204 combines and organizes the parsed log data, i.e., logging events ingested from different sources, in a centralized location, for example, at the storage resource 112, allowing for efficient analysis by grouping related events, filtering based on criteria, and performing calculations on the aggregated data. For example, the storage resource 112 may be an off-the-shelf, commercially available, or proprietary cloud storage system, such as an Amazon S3 cloud object storage system to which the logging system 200 can communicate for writing data. The data is aggregated, i.e., consolidated and organized at the centralized location, in a predetermined manner and then it will write the data in a particular format to a storage device 206, which may include the storage resource 112 in FIG. 1, or another persistent storage device such as a local disk or file store 112, or other cloud-based data store at the SaaS environment 130. In some embodiments, after the raw log data has been ingested and processed through a parsing mechanism to extract relevant information, the parsed data can be translated into structured alerts, which can be easily analyzed and used to trigger notifications, alarms, and so on.

Computer systems such as a client computer 110 in FIG. 1 often require statistical search functions to be computed on this stored log data or to search that data to view matching events in sequence. This search would be performed by a search processor 208, which can receive requests in the form of a query language, such as SQL, to specify the data to be returned from the log storage 206. This query request may be sent to the search processor 208 by a REST API server or the like (not shown), serving requests to create searches from dashboards, user interfaces (UIs) and API clients, such as customer written scripts.

The logging system 200 generally has to process, store, and search very large amounts of data and retain that data for a period of time. Each event in a received and ingested log is also timestamped. This data ingested by the logging system 200 may have a range of data formats where the keys are unknown in advance and the set of keys and their values may change over time or even if structured they may have a very large number of known keys. Indeed, the data may also be unstructured where there may be no easily determined keys and a lot of the data cannot be stored based on keys and the type of the values are often not well defined.

These characteristics of logs make them generally unsuitable for relational databases. Some conventional logging systems provide indexing techniques, for example, described by Apache Pinot in https://docs.pinot.apache.org/basics/indexing, the contents of which are incorporated by reference herein in their entirety. However conventional indexing technologies require knowledge of the received log data, for example, relying on prior experience of searches for particular values. The logging system 200, to the contrary, does not rely on previous experience and instead indexes the data automatically and in doing so generates dedicated indexes while ingesting the data (subject to a maximum number of keys). Here, there is no upfront requirement for a list of keys in advance to index on. Even if detected keys that are indexed change over time, the summary index of the logging system 200 obviates any need for manual intervention. Other logging systems use a Bloom filter or the like to accelerate queries of interest by reducing the amount of data loaded from storage and iterate through to determine if it matches the query. While a Bloom filter is effective at providing a definite answer for keys not in the set, a drawback of conventional Bloom filters is that of false positives, where a query match for a key of interest in the filter produces a result that is only able to state that matching data may be present.

Other specialized logging systems require users to enter custom parsing rules for ingesting the logs into the logging system to create an encoding scheme that can be stored in a highly compressed and searchable format, for example, described in https://www.usenix.org/conference/osdi21/presentation/rodrigues, the contents of which are incorporated by reference herein in their entirety. These specialized logging systems require unique parsing rules or storage format, which is cumbersome in an SAAS environment where different log types are received and require different formats.

Indexing a database includes the creation of a separate data structure, often a tree or hash table, that stores keys derived from one or more columns of the dataset along with pointers to the corresponding records, and in particular, can reference the location of data within a data set stored at a database table without the need to search every row in the table every time a given table is accessed. This allows for efficient retrieval of specific data items without having to scan the entire dataset sequentially.

However, indexing comes at the cost of additional storage space and writes to maintain the index data structure. There are many different types of indexes, each with particular design trade-offs involving lookup performance for a given set of data, index size and the performance of updating the index. For example, indexes based on B+ trees are most efficient where the values of a variable repeat very frequently due to the database being configured by the B+ trees to have fixed-size blocks or pages. On the other hand, a bitmap index can offer a significant performance improvement for fields with a small number of values. Other types of index include reverse index, dense index, sparse index, inverted index, primary index, hash index, and so on.

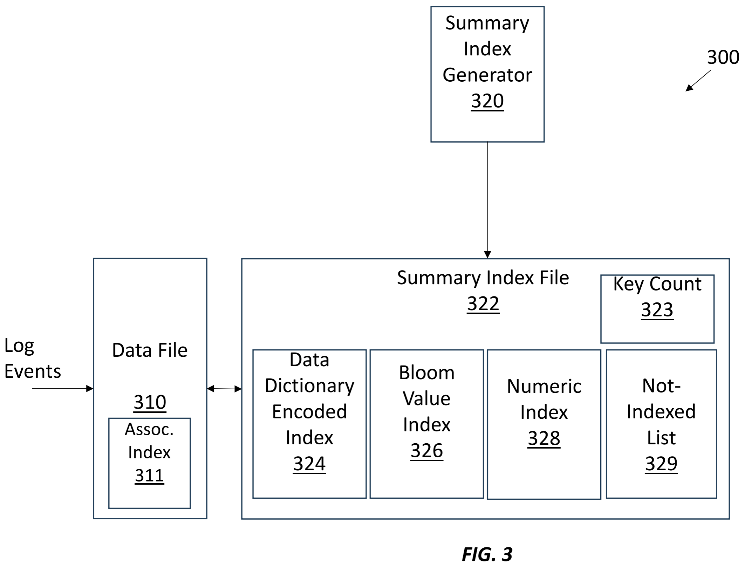

In brief overview, embodiments of the present inventive concept include a novel index that addresses the abovementioned problems associated with conventional indexes in a general purpose logging platform, such as may be offered as a Software as a Service (SaaS) in a cloud computing environment. In particular, the novel index, referred to as a summary index, and held in a summary index file (see for example FIG. 3), reduces the amount of data to be searched using its set of sub-indexes to skip entire data files, and not merely blocks of data files. This reduces the amount of data to scan for matches, resulting in faster searches.

FIG. 3 is a block diagram of an indexing system 300 for an event logging platform, in accordance with some embodiments of the present inventive concept. The indexing system 300 can replace, modify, or complement an event logging platform, for example, the logging system 200 of FIGs. 1 and 2.

The indexing system 300 can include its own storage device or rely on an external storage device, such as storage resource 112 in FIG. 1, for holding received log events in a predetermined defined format. In some embodiments, as shown in FIG. 3, a set of data files 310 may be stored in a .data file format or other structure comprising records having a set of predefined schema. In some embodiments, the data files may hold an encoded form of a predetermined number of events. The number of events held by a data file 310 may have a maximum size, for example, 1GB. In other embodiments, the data files 310 may hold events that do not exceed a predetermined threshold value, for example, a total size of 1GB. In some embodiments, a data file 310 comprises a set of data blocks, each having an associated index 311, which may be similar to a conventional block index or the like, that maps which data belongs to which block, allowing for faster access and retrieval of information within the file 310. As described herein, the associated index 311 is a lower indexing layer of the indexing architecture than the summary index. For example, the other layer may include a Bloom index or the like (different than the Bloom value index 326 of the summary index file 322) for blocks of data in the data file 310. The associated index 311 can therefore have a known index structure, such as a hash, B-tree, and so on.

The indexing system 300 includes a summary index generator 320 constructed to accelerate the search operation of the search engine. In some embodiments, the aggregation and store write 204 of FIG. 2 may include the summary index generator 320, which writes the summary index into storage such as the summary index file 322. The summary index file 322 in turn can accelerate search operations perform by the search engine.

The summary index generator 320 scans the raw log data and creates a new summary index file 322 for each data file 310, which can facilitate a substantial reduction in the amount of data to be efficiently searched, for example, by the search processor 208 in FIG. 2. For example, indexing system 300 can achieve a summary file-to-data file ratio of up to 10000:1, which allows efficient processing of summary data for analyzing the data. In some embodiments, the data file 310 and summary index file 322 are at different storage devices, for example, different volumes (not shown) of the storage resource 112. For example, the index file 322 can be on a solid state storage device, which has a fast seek time, while the data files 310 can be on a storage device with high I/O speed.

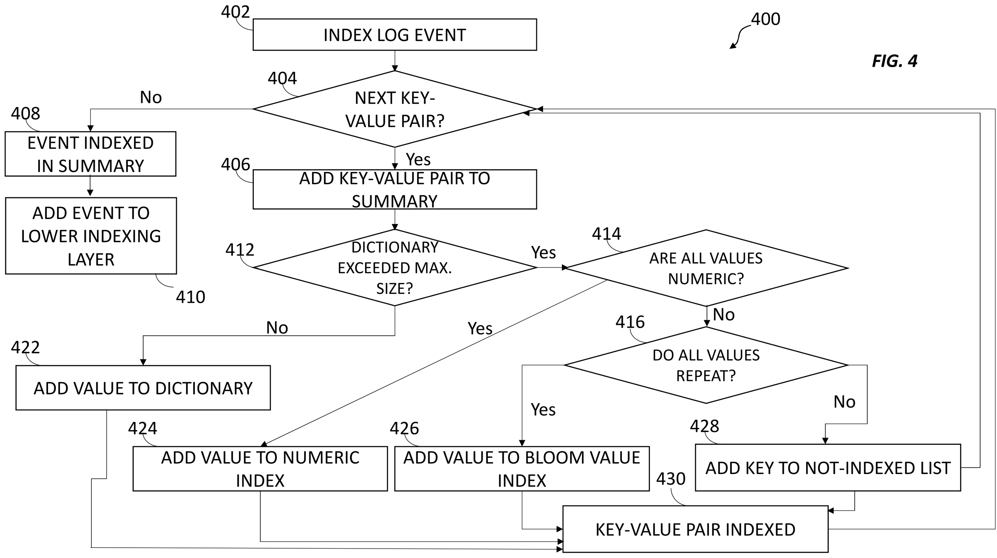

In some embodiments, the summary index file 322 builds a data dictionary index 324 and a Bloom value index 326, for storing key-value pair values depending on a set of predetermined conditions, described in FIG. 4. In some embodiments, the system 300 also includes a not-indexed list 329 for storing keys that are not processed by the summary index file 322. The not-indexed list 329 allows the system to avoid the processing of files when the searched key is not detected, for example, when the query includes clerical errors, e.g., typographical errors, or searches of data having different formats, and so on. In creating a separate index file 322, the summary index generator 320 can communicate with the ingestion and log parsing engine 202, an aggregation and store writer module 204, and/or log storage device 206 to process incoming log files for storing index entries that provide information such as metadata regarding the contents of the corresponding data files 310.

The summary index file 322 includes a key count field 323 that holds the count of the number of values for each key, which can be used for cardinality-related purposes, described herein. The summary index file 322 also holds a dictionary of values for each key, which contains the values of keys for all blocks in the data file 310, which can be used for reducing search-related computations described herein. The dictionary index 324 is a well-known data structure that stores a dataset as a set of key-value pairs, where each key is unique and has an associated value and they are often implemented as hash tables. In some embodiments, a dictionary is generated for each key, and this dictionary includes all the values of the key up to a predetermined threshold.

The summary index file 322 is constructed and arranged to store all values for a key in the dictionary index 324 up to a threshold, as the dictionary will be used to test for keys and their values in a search. If the number of values for a key exceeds the threshold value, which can be configurable, then no more values will be held for that key in the dictionary index 324, in order to reduce memory usage where keys have an excessive number of values, the excessive number being predefined. In some embodiments, the indexing system 300 includes a Bloom value index 326 or other probabilistic index data structure that is created for keys that have a number of values that exceed a predetermined threshold in which case these keys are not held in the dictionary index 324 but are instead processed by the Bloom value index 326, or other probabilistic index or filter. The Bloom value index 326 can be checked to determine if the key(s) being searched for is not in that larger dataset and so reduce expensive disk access for those parts of the dataset not containing the key(s).

In some embodiments, the indexing system 300 includes a numeric index 328 for precomputed numeric values found in the dictionary index 324. It is well-known that the processing time for computing and comparing integers is substantially faster than alpha-numeric values, so by separating the integers into a different index 328, the compute search time can be reduced.

In some embodiments, the indexing system 300 includes a not-indexed list 329 for keys/ columns that are not indexed by the summary index file 322. As explained above, files can be avoided entirely when a query does not contain a desired key.

For a database, cardinality indexing measures the number of unique values in a column relative to the total number of rows in a table. A high cardinality is when columns have many unique values. Low cardinality, on the other hand, refers to columns with few unique values. High cardinality columns with many unique values are preferable for indexing over low cardinality columns, wherein indexes are less effective for query performance when searching for records since there would be few values for searching. Here, the indexing system 300 tracks the number of values stored in the key count field 323 to determine value repetitions. If the number of repeat values does not exceed a predetermined threshold, for example, the same values do not appear at least three times on average, then the values are determined to have a high cardinality which is problematic for the summary index, and the summary index file 322 is configured to not build an index for the column. Instead, the associated block index 311, for example, having a .bloom file format or the like, may be suitable since it is built on a smaller amount of data, for example, a single block of events. The feature of distinguishing high cardinality and low cardinality permits that system 300 to perform faster low cardinality searches, as these may skip entire files rather than just blocks in the data file 310, as outlined above.

In particular, a dictionary containing many unique values and deemed to be high cardinality includes indexed columns or attributes having a large number of unique values relative to the number of records in the database. The threshold for the dictionary permits a relatively small number of unique values, e.g., hundreds of values for a key. High cardinality above this threshold makes it undesirable to use the dictionary index for this key, but keeping the count of values field 323 can also be implemented to determine if a Bloom value index 326 is suitable if the dictionary threshold is exceeded.

The summary index file 322 is configured so that data can be partitioned according to keys or key-value pairs. Structured data with specific patterns of key-value pairs can be partitioned on key-value pairs where there are key-value pairs that are rarely seen, making "needle in a haystack" searches faster, e.g. when looking for infrequent errors Adding new key-values to partitioning requires no code changes for search (as just a dictionary entry) and only requires such key-value pairs to be configured or supplied by another process for the ingestion service.

Another feature is that the summary index file 322 combines the benefits of a dictionary index and Bloom filter, by managing the memory usage of the dictionary and reducing the likelihood of using the Bloom filter and its possibility of false positives. Depending on the cardinality and on the type of the values in the data such as numbers or strings, the best index is selected, for each key be it dictionary, numeric, Bloom, none (when too expensive). Also, the system 300 provides for automation so that user intervention is not required. For example, the indexes 324, 326, 328 can be generated without requiring user configuration to select an index for particular data. Also a range of formats can be processed without requiring keys to be known a-priori. As described herein, each indexed key is referenced to a dedicated dictionary of the index 324 or to a dedicated numeric index 328, i.e., the index contains only the values for the specific key, or to a common Bloom value index 326, which can be shared over multiple keys.

The partitioning capabilities of the summary index file 322 can take advantage of structured data with specific patterns of key-value pairs by partitioning on key-value pairs where there are key-value pairs that are rarely seen, making "needle in a haystack" searches faster, e.g. when looking for infrequent errors. In addition, new keys to be partitioned will be provided by another service that can analyze the searches performed for particular patterns of key usage and which will update the configuration of the summary index generator 320 and create the required entries in the summary index, such as the dictionary entry. The addition of these new keys to be partitioned is internal to the summary index and will not require code changes to the code implementing the search processor 308.

FIG. 4 is a flow diagram of a method 400 for indexing data, in accordance with some embodiments of the present inventive concept. In describing the method 400, reference is made to elements of the indexing system 300 of FIG. 3 as implemented in the computing environment 100 of FIG. 1.

At step 402, indexing of a log event is initiated, for example, organized in a predetermined format, where each log entry is arranged into a series of loglines, or more specifically, key-value pairs.

At decision diamond 404, a determination is made whether the log event has another key-value pair to index. If yes, then the method 400 proceeds to step 406, where the key-value pair identified in step 404 is added to the summary index file 322. If no, then the method 400 proceeds to step 408 where the log event in step 402 is indexed in the summary index file 322, then at step 410, the event is added to a lower indexing layer of the multi-layered indexing system, for example, a Bloom block index. Step 410 is for the second layer of indexing separate to the summary index, or more specifically, pertains to Bloom filter for the blocks in the data file 310. This separate filter is executed so that when the summary index file does not skip a data file, we may still rely on the Bloom filter in that data file and skip some blocks in that data file. The summary index can operate without this second layer. In some embodiments, this second layer may include an index or filter other than a Bloom index. In some embodiments, the Bloom block index in step 410 may be similar to the bloom value index in step 426. However, a difference may lie in the amount of data that is indexed. A file may be divided into small batches of events (referred to as blocks" and a Bloom index is computed over each block. As the amount of data in a block is limited, all tokens, keys and values can be added to the Bloom index. On the other hand, the summary index is computed on a whole file, which may include thousands of blocks but not limited thereto. Only values that do repeat enough but do not fit in a dictionary index 324 are added to the Bloom value index 326 of the summary index file 322.

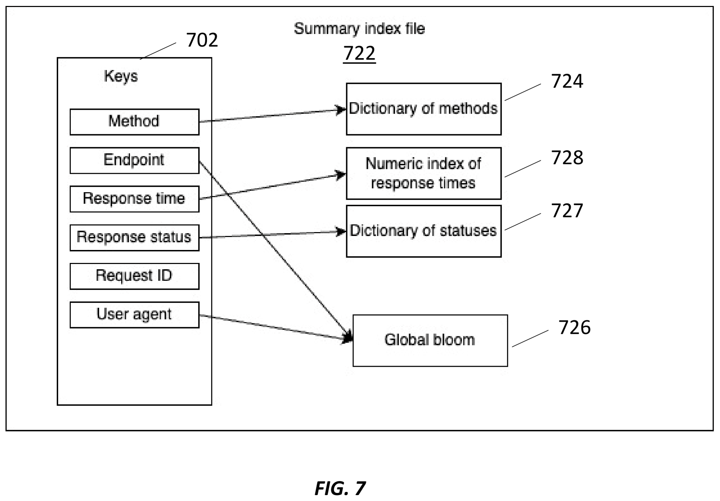

Returning to step 406, after the key-value pair of the log event is added to the summary index file 322, the method 400 proceeds to decision diamond 412 where a determination is made whether the dictionary index 324 storing the set of key-value pairs exceeds a predetermined maximum size, or threshold, which can be set according to storage size requirements. More specifically, a dictionary is created for each key, for example, shown in FIG. 7. This threshold may be referred to as a first threshold because this method 400 includes additional thresholds described below.

If no, then the method 400 proceeds to step 422 where a value is added to the dictionary of values. As previously discussed, the dictionary index 324 is constructed and arranged to receive low cardinality values, i.e., columns having few values. If yes, then the method 400 proceeds to decision diamond 414, where a determination is made whether the values in the dictionary index 324 are numeric. The precomputed numeric values in the dictionary index 324 can reduce search computations. If yes, then at step 424, the value is added to a numeric index 328. A column having numeric-only values can be processed to identify the minimum, maximum, count, and sum of the values in the column, which can reduce the need to compute these values during a query, for example, where the search algorithm uses the index available for each key in the query filter. The numeric index can be checked when there is at most one index per key, so a look up can be performed so we look up an index in the summary index file. If no, then at decision diamond 416, where a determination is made whether the values repeat greater than a predetermined value, for example, the number of times that a value appears in a column is greater than 3. If yes, then at step 426, then the value is indicative of a low cardinality value, which can be provided to the Bloom value index 326 which desires a lot of values but is less prone to false positives after this check. If no, then this is indicative of a high cardinality value, e.g., the value for the particular key does not appear a minimum number of times, for example, at least 3 times, and the method 300 proceeds to step 428, where the key is added to the not-indexed list 329, i.e., the summary index does not create an index for the key because adding the high cardinality values to the Bloom value index 326 may increase the frequency of undesirable false positives. the Bloom value index 326 can also be made more efficient because the count of values can be used to avoid saturating the Bloom value index.

Accordingly depending on the cardinality and the type of the values in the data, at step 430, the best index among steps 422, 424, 426, 428 can be selected for indexing the key-value pair in step 406. In other words, in each of steps 422, 424, 426, the output can be provided to step 430, where the key-value pair from step 406 is processed and indexed according to the respective step that the key and/or value of the pair is placed. If step 428 is imposed, then the method proceeds from step 428 to step 404 after the key is added to the not-indexed list 329.

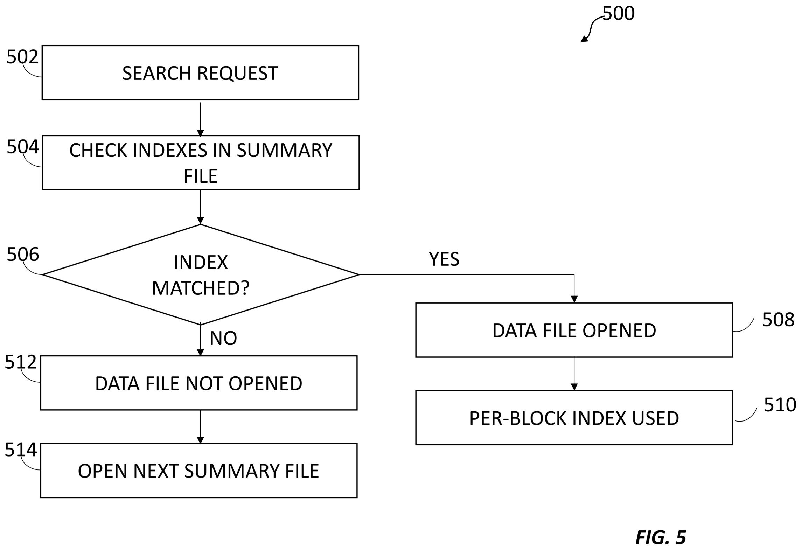

FIG. 5 is a flow diagram of a method 500 for executing a search algorithm, in accordance with some embodiments of the present inventive concept. In describing the method 500, reference is made to elements of the indexing system 300 of FIG. 3 as implemented in the computing environment 100 of FIG. 1 and the method 400 of FIG. 4.

At step 502, a search request is initiated. At step 504, the summary index file 322 is checked first. In particular, In particular, the index of each search key (324, 326, 328, 329) is checked for a match. The summary index file 322 is created for a particular data file. By checking the summary index file 322 first, as described below, search-related computations can be reduced because the search may not entail the data file 310.

At decision diamond 506, if there is a match, i.e., step 422 where the key in the search and the values being searched are in the dictionary index 324 or in one of the other indexes in the summary index file, then the method 500 proceeds to step 508, where the data file 310 is opened then to step 510 where the per-block index, e.g., index 311 of the data file 310 such as the Bloom filter index (distinguished from Bloom value index 326 of the summary index file 322 is used. Since the key-value pair match is made at decision diamond 506, either use of the summary index file 322 is complete or the key-value pair with respect to the data file 310 is known to include relevant data of interest for the query and the indexing system 300 operates on the data file 310 using other indexing types such as a per block Bloom is implemented, for example, at the associated index 311 where each block is associated with a pair of data points, to reduce the need to scan all the data in the data file 310..

If at decision diamond 506, no match is determined, then the method 500 proceeds to step 512, where the data file is not opened as the summary index has determined there is no need to scan that data file. At step 514, the next summary index file corresponding to the next data file is checked, since the search can entail a file-by-file or block-by-block data query. The method 500 can then return to step 504.

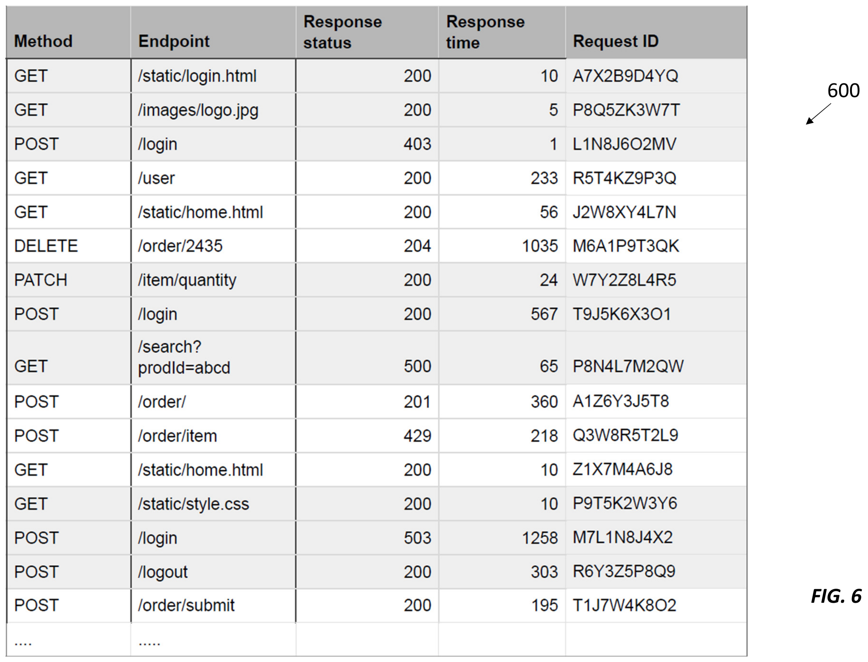

FIG. 6 is a table 600 of log data processed according to embodiments of the present inventive concept. The table 600 includes example log data arranged in a series of loglines shown as key-value pairs that can be indexed according to the method 400 shown and described with reference to FIG. 4.

As shown, the table 600 includes several index key columns, for example, entitled "Method," "Endpoint," "Response Status," "Response Time," and " Request ID." The method 400 of FIG. 4 applied to the table 600 can produce the following indexing results, each performed in the summary index file 322 shown in FIG. 3.

The "Endpoint" key is applied to and processed by the Bloom value index 326 at step 426 because there are a lot of unique values.

The "Response Time" key is applied to and processed by the numeric index 328 at step 424 where minimum, maximum, and sum values are precomputed for subsequent indexing of the key-value pair.

The "Method" and "Response Status" keys are received and processed by the dictionary encoded index 324 at step 422 as there is a relatively low number of unique values. In some embodiments, the response status key may also be partitioned with a specific dictionary entry for a particular code that is of interest and not frequent, e.g. 500 indicates a system error, it may not appear in many logs and may be of interest when it occurs, making a separate entry worthwhile.

The "Request ID" key has a very large number of unique values with an ID per log line and is received and processed by the not-indexed list 329, since there is little benefit in providing an index for the key-value pairs under the Request ID key.

FIG. 7 is a block diagram of a summary index file 722for keys shown in FIG. 6.. The block diagram illustrates how the events in FIG. 6 are represented in a summary index, for example, stored in the summary index file 722, which may be similar to or the same as the summary index file 322 described with reference to FIG. 3.

As shown in FIG. 7, the summary index file 722 stores a plurality of keys 702, namely, the "Method," "Endpoint," "Response Status," "Response Time," and " Request ID" keys described in FIG. 6, in addition to a "User Agent" key. The Method key is processed by the dictionary index 724. The Endpoint and User Agent keys are processed by the global Bloom index 726. The Response Time key is processed by the numeric index 728. And the response status key is processed by the dictionary index 727. Although not shown in FIG. 7, the Request ID key can be processed by the not-indexed list 329.

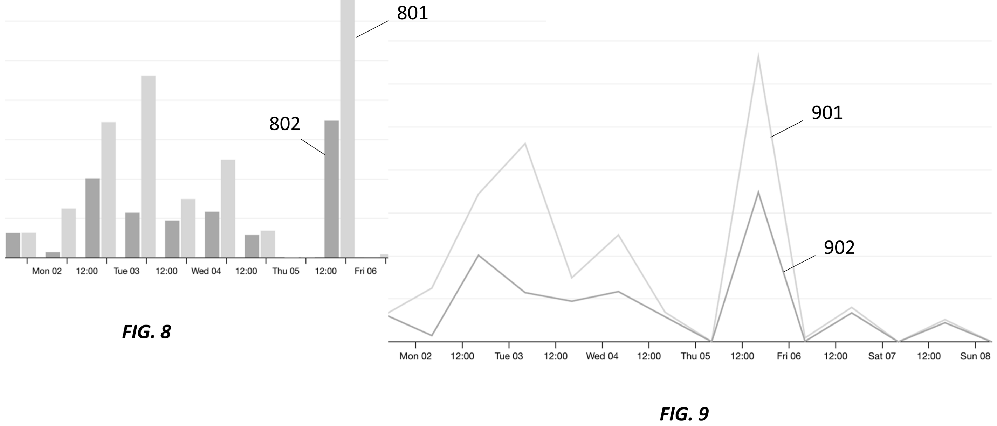

The benefit of the summary index in accordance with embodiments described herewith are illustrated in FIGs. 8 and 9, which are bar and line graphs, respectively, illustrating comparative results of a conventional log file content search and a search performed according to embodiments of the present inventive concept. The data illustrated in the results shown in FIGs. 8 and 9 was captured during a one week period (Monday (Mon) 02 through Friday (Fri) 06). Bar 801 and line 901 illustrate the total number of bytes in the relevant log files during that week and the bar 802 and line 902 illustrate the amount of data skipped due to the use of the summary index. The benefit of the summary index can be seen in the plot in FIGs. 8 and 9, where the lower bar 802/ line 902 shows the amount of data skipped in searches performed on logs during 1 week of searches and the upper bar 801/ line 901 shows the total amount of data that would have been searched without the use of the summary index. It can be seen that the use of the summary index has avoided searching 50% of the data during that week. For a specific example of how effective the summary index can be for particular searches, , the search " SELECT count(*) WHERE xKey ='xxxxxxxxxxxxx' and response_status > 499 LIMIT 100" on a web service log checked 1487 summary files with summarized data having 1,57 TeraBytes in the time-range of the search. Using the summary file, 0.97 TeraBytes of this summarised data, in 919 summary files, was skipped in the time-range of the search.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for indexing data in an event logging system, comprising:
providing a data file for storing a set of log data;
generating a summary index associated with the data file;
arranging the set of log data as a plurality of key-value pairs in the summary index;
analyzing each key of the key-value pairs to determine at least one of a plurality of indexes in the summary index for adding each value of the key-value pairs; and
determining whether to access the data file in response to a search of the summary index.

2. The method of claim 1, wherein analyzing each key of the key-value pairs further comprises determining a cardinality and a type of each value.

3. The method of any preceding claim, wherein the summary index stores a number of unique keys that is less than or equal to a first threshold.

4. The method of any preceding claim, wherein the plurality of indexes in the summary index includes a dictionary encoded index, a probabilistic index, and a numeric index.

5. The method of claim 4, wherein the dictionary encoded index is configured to store a maximum number of key-value pairs of the plurality of key-value pairs that is less than or equal to a second threshold; and/or
wherein the numeric index is configured to store values of value-only key-value pairs in the numeric index; and/or
wherein the probabilistic index is configured to store values that repeat under a same key more than a third threshold.

6. The method of claim 4, wherein a key of the plurality of key-value pairs that do not have values that repeat under the key more than the third threshold are indexed in a not-indexed list.

7. The method of any preceding claim, further comprising:
storing a count of a number of values of each key in a key count field that holds the count of the number of values for each key; and/or wherein a ratio of a summary file size and a data file size is 10000:1.

8. An indexing system, comprising:
a data repository that stored at least one data file that includes main data to be indexed, the main data arranged according to a predetermined structure;
a summary index associated with the data file, the summary index include a plurality of indexes that hold values of a plurality of key-value pairs, and that is accessed and searched by an external search system to determine whether to search the at least one data file in response to analyzing the key-value pairs at the summary index.

9. The indexing system of claim 8, further comprising a special-purpose processor that determines a cardinality and a type of each value of the key-value pairs in the summary index.

10. The indexing system of claim 8 or 9, wherein the summary index stores a number of unique keys that is less than or equal to a first threshold.

11. The indexing system of any of claims 8 to 10, wherein the plurality of indexes in the summary index includes a dictionary encoded index, a probabilistic index, and a numeric index.

12. The indexing system of claim 11, wherein the dictionary encoded index is configured to store a maximum number of key-value pairs of the plurality of key-value pairs that is less than or equal to a second threshold; and/or
wherein the numeric index is configured to store values of value-only key-value pairs in the numeric index ;and/or
wherein the probabilistic index is configured to store values that repeat under a same key more than a third threshold.

13. The indexing system of any of claims 8 to 12, further comprising a not-indexed list,
wherein a key of the plurality of key-value pairs that do not have values that repeat under
the key more than the third threshold are indexed in the not-indexed list.

14. The indexing system of any of claims 8 to 13, further comprising a key count field that stores count of a number of values of each key.

15. A computer-implemented method for performing a database search, comprising:
executing a search request;
accessing a dictionary index in a summary index file that holds a key and values of the key;
analyzing each key of a plurality of key-value pairs to determine at least one of a plurality of indexes in the summary index for adding each value of the key-value pairs;
generating a Bloom filter in response to the number of values for the key exceeding a predetermined threshold; and
determining whether to access the data file in response to a search of the dictionary index.
